# EUROPEAN PATENT APPLICATION

(11) **EP 3 628 194 A1**
(43) Date of publication of application: **01.04.2020**
(21) Application number: 19198827.8
(22) Date of filing: 22.09.2019
(51) Int. Cl.: A47J 31/44

(54) **METHOD AND DEVICE FOR MAKING BEVERAGES**

(30) Priority: 27.09.2018 IT 201800008959
(71) Applicant: Global Coffee Service F.V., 35641 Schoffengrund-Laufdorf (DE)
(72) Inventor: Vettorel, Fabio, 35641 Schoffengrund-Laufdorf (DE)
(74) Representative: Citron, Massimiliano

(57) **Abstract**

To better heat and/or froth milk (L) or a liquid with a wand (20), supplying heated steam, belonging to an electric beverage production apparatus, in particular an espresso coffee machine,
the milk (L) or liquid being contained in a container (T) external to the machine,
the temperature of the milk (L) or liquid is detected by a portable temperature probe (50), separated and/or detachable from the wand (20) and from the container (T) and from any component of the apparatus, and
the steam supply from the wand (20) is electronically controlled as a function of the detected temperature.

## Description

The present invention relates to an electrically operated device for the production of beverages, in particular an electrically operated coffee machine, with a steam wand designed for frothing milk, and to a method to heat and/or froth milk. The present invention is described as an example for coffee machines, but can also be used in other milk-frothing beverage production machines (such as vending machines). The present invention is particularly suitable for the preparation of cream to make a cappuccino, latte macchiato, hot macchiato coffee or hot milk with froth. The present invention in particular envisages that the steam wand is separated from the coffee machine, and e.g. is connected to the coffee machine in order to receive the steam from it.

To heat milk and froth it in an external container, hot-steam wands are used. The milk is heated with steam, and must also be set in swirling motion and added with forced air - by means of a compressor - to make it take in air. Since the temperature of the steam must be precise, a temperature sensor is used to control the steam flow, like in EP2878241. However, such a sensor is complex to implement, requires the modification of the containers for the milk and incorrectly detects the milk temperature because it is placed under the bottom.

In other systems the temperature sensor is mounted on the wand, but its like-span is very modest due to its delicacy and the inevitable shocks during use.

WO 2015 042652 describes a system in which the temperature of the milk is measured by a temperature sensor associated with a jug. The temperature sensor can also be mounted in a jug's handle, but always detects the temperature outside the jug, with a big measurement error. In fact the detected temperature is not a reliable data because it represents the temperature of the metal, not the temperature of the milk.

The object of the present invention is therefore to provide a machine and method for the production of beverages, in particular an electrically operated machine with steam wand (as well as a corresponding steam wand and a corresponding method of heating and/or frothing for milk), which alleviates or eliminates the disadvantages of the prior art.

In particular, it is an object to allow better control over the quality of the froth and the hygienic state of the milk frothing system.

Another particular object is to exactly dose the amount of milk to be frothed, avoiding milk waste and helping the operator.

Another particular object is to heat the quantity of milk to be frothed at a more precise temperature.

The invention is defined in the appended claims, wherein the dependent ones define advantageous variants.

In the following, reference will be made to a liquid to be processed, wherein preferably said liquid is milk.

A method is proposed for heating and/or frothing a liquid with a wand, supplying heated steam, belonging to an electrical beverage production apparatus, in particular an espresso coffee machine,
the liquid being contained in a container external to the machine,
with the steps of
detecting the temperature of the liquid with a portable temperature probe, separated and/or configured to be detachable from the wand and from the container and from any component of the apparatus, and
controlling, e.g. electronically, the delivery of steam from the wand and/or of a flow of forced air coming from a compressor as a function of the detected temperature.

The liquid set in turbulent motion by the steam takes in the air present in the forced air flow.

Using the portable temperature probe the temperature of the liquid is measured inside said container.

According to a first preferred variant, the probe is inserted or configured to be insertable into the container at a distance from the bottom of the same container where in use there is the liquid, so as to be in direct contact with the - and/or immersed in - the liquid to be probed.

According to a preferred variant, the temperature probe detects the temperature of the liquid inside the container by direct contact with the liquid. In particular, the temperature sensor or probe is placed inside the container, in the cavity that holds the liquid.

A big advantage is that the detected data is precise because it actually represents the milk temperature. Note the difference with WO 2015 042652. In WO 2015 042652, when the first processing is made to the milk to create the froth, one is faced with two different temperatures: the first is that of the metal container which is detected by the sensor, the second is the totally different temperature of the milk. As the jug or milk-jug keeps being used, the new milk will be introduced into an increasingly hot jug, thus resulting in WO 2015 042652 in an increasingly inaccurate temperature detection.

According to a second preferred variant, the probe is coupled or configured to be couplable to the container for detecting the temperature.

According to a third preferred variant, the probe is able to - and comprises means to - remotely detect, without direct contact, the temperature of the liquid contained in the container.

According to a preferred variant, the probe transmits a temperature data to a receiver of the device or machine via a radio signal, or generally in wireless manner (e.g. infrared or ultrasound). Note that this variant alone solves the problem of connecting easily and without circuit complications the sensor to the receiver; also it allows the probe positioning without wiring that would interfere or limit the range of action.

According to a preferred variant, the temperature detected by the probe is ignored by the steam electronic control if such temperature is higher than a threshold value. In particular, if the temperature detected by the probe is higher than the threshold value, the probe is temporarily excluded from the steam control system. This step of the method has the advantage of correcting the error of an operator who is using a temperature sensor still hot due to the previous preparation of the hot drink. If the sensor has not cooled sufficiently after the first preparation, the steam control (temperature and/or flow) would be based on an altered data thereby compromising the quality of the next beverage. Another advantage is allowing the simultaneous use of a plurality of probes communicating with the same machine or device.

According to a preferred variant, the temperature detected by the probe is ignored by the electronic control until the steam supply starts.

According to a preferred variant, the liquid level inside the container is detected electronically and with an electronic control the wand is lowered into the container until a steam nozzle, located at one end of the wand, is immersed in the liquid for a depth depending on the detected level.

According to a preferred variant, the liquid temperature is detected at two or more points separated from each other, so as to pick up the local temperature differences of the liquid. Thus it is possible to have a more precise estimate of the average temperature of the liquid.

Another aspect of the invention is a system for producing a hot-liquid based beverage, comprising
a machine, in particular an espresso coffee machine, comprising
a wand capable of emitting heated steam and/or forced air coming from a compressor, and
a control unit to control the supply of steam and/or forced air from the wand,
a container, external to the machine, for containing liquid to be heated,
a temperature probe, to detect the temperature of the liquid inside the container, that is
portable,
separated and/or configured to be separable from the wand, from the container and from any component of the machine, and
configured to transmit a detected temperature data to the control unit, so that the control unit controls the steam and/or forced air supply from the wand as a function of the detected temperature.

The temperature probe comprises a temperature sensor arranged to detect the temperature of the liquid inside said container by direct contact with the liquid.

According to a preferred variant, the probe or sensor is configured to be inserted when needed into the container, e.g. at a predetermined height where in use there is milk. According to a different preferred variant, the probe or the sensor is configured to be couplable to the container when needed to detect the temperature.

According to a preferred variant, the temperature sensor or probe is placed or can be accommodated in direct contact with the liquid and/or immersed into it. In particular, the temperature sensor or probe is placed inside the container, in the cavity that receives the liquid. E.g. the sensor can be surrounded by liquid or mounted on the inner surface of the container to be wetted by the liquid.

As a preferred variant, the temperature probe comprises
A stem comprising a/the temperature sensor near one end thereof, and
a hooked portion, integral with the stem, having a shape such as to be able to be placed astride an edge of the container and - e.g. - at a predetermined height.

In this case the temperature probe can be a component detached from the container and temporarily couplable to it to detect the temperature, or the temperature probe can be a component permanently attached to the container, e.g. a handle.

Preferably the probe comprises a graduated scale to visually indicate the liquid level inside the container. E.g. the graduated scale can be made on and along said stem.

Preferably the probe comprises a plurality of sensors communicating with the same control unit. According to a preferred variant, the probe comprises two or more temperature sensing points, separated from each other, so as to pick up77 the local temperature differences of the liquid. E.g. the two or more temperature sensing points are placed along said stem.

According to a preferred variant, the probe comprises a transmitter of radio or wireless signals (e.g. with Bluetooth® technology), to transmit a temperature data to a compatible receiver of the machine. Note that this variant solves alone the problem of connecting easily and without circuit complications the sensor to the receiver of the machine; it also allows the sensor positioning without wiring that would interfere or limit the range of action.

According to a preferred variant, the control unit is configured for ignoring the temperature data received from the probe if such temperature is higher than a threshold value.

Another aspect of the invention is a machine, in particular an espresso coffee machine, comprising
a wand capable of emitting heated steam and/or forced air,
a control unit to control the supply of steam and/or forced air from the wand, and configured for
receiving a detected temperature data via a wireless signal, and
controlling the steam and/or forced air supply from the wand as a function of the detected temperature.

The machine shares the variants listed above for the system and method. In particular, said detected temperature data comes from a temperature sensor placed in direct contact with the liquid, or immersed in the liquid.

Another aspect of the invention is a temperature probe for a liquid to be heated and contained in a container external to a machine comprising
a wand capable of emitting heated steam and/or forced air, and
a control unit to control the delivery of steam and/or forced air from the wand,
wherein the probe is
portable,
separated from the wand, from the container and from any component of the machine, and
configured to transmit a detected-temperature data to the control unit, so that the control unit controls the delivery of steam and/or forced air from the wand as a function of the detected temperature.

The probe shares the variants listed above for the system or the method or the machine.

Another aspect of the invention is the use of a temperature sensor for detecting the temperature of a liquid contained in a container external to a machine structured to heat and/or froth the liquid with a wand supplying heated steam and/or forced air,
wherein the temperature sensor is separated from the wand, the container and any component of the machine.

In particular, in said use the sensor is placed in direct contact with the liquid, inside the container. More particularly, in said use the temperature sensor or probe is placed or can be accommodated in direct contact with the liquid and/or immersed in it.

Said use shares the variants listed above for the system or the method or the machine or the sensor.

In particular, said machine is an espresso coffee machine, or it is a dedicated self-contained machine, which can be coupled to an espresso coffee machine. Through the coupling, the wand can e.g. be supplied with steam and/or air generated in the coffee machine.

In particular, said machine comprises
a support plane,
a level sensor to detect the level of the liquid contained in the container when the container is placed on the support plane,
an actuator for moving or translating, e.g. linearly, the wand to and from the support plane,
a control unit to drive the actuator according to a signal emitted by the level sensor, so as to immerse into the liquid the tip of the wand, where there is a nozzle for steam and/or forced air, at a predefined depth compared to the detected level.

Preferably the free end of the wand comprises a nozzle for steam and/or forced air.

Preferably the wand is fed by a steam and/or compressed air generator. The generator can be arranged in said machine or in the espresso coffee machine.

In a preferred variant, which allows the air jet (necessary to aerate the liquid) to be eliminated from the wand, the wand comprises
a stem extending from the machine and
a terminal portion, where there is the nozzle for steam and/or air, inclined with respect to the stem by an obtuse angle, e.g. 135 degrees.

Note that this solution independently solves the problem of how to aerate the liquid or milk without tilting the container and without emitting air from the wand. The aforementioned inclination allows the steam jet alone to lift the liquid or milk to let it take in air. Preferably, the stem extends from the machine substantially in a direction perpendicular to said support plane, so that the terminal portion is inclined with respect to said support plane.

Preferably the control unit is configured so as to process the signal transmitted by a sensor only when or after the control unit has commanded the start of steam delivery. By detecting afterwards in real time the temperature increase from a sensor, the control unit discerns which probe is currently immersed in the container hit by the steam jet. This solution allows in a simple way using many temperature sensors and distinguishing the one in use under the wand, which preferably in the machine is only one. For machines with more than one wand the criterion can be the same, or e.g. the distance of the sensor from the wand is detected, e.g. by measuring the power of the emitted radio signal (in which case each sensor transmits an identifying and univocal signal) or with proximity sensors.

In particular, said temperature sensor is unconstrained with respect to the wand, to the container and to any component of the machine, so that said temperature sensor is able to be moved freely with respect to the wand, to the container and to any component of the machine.

The advantages of the invention will be clearer from the following description of a preferred embodiment of a device, referring to the enclosed drawing in which
- Fig. 1 shows in perspective view an espresso coffee machine;
- Fig. 2 shows a block diagram of an espresso coffee machine;
- Fig. 3 shows a variant of temperature probe as applied to a container;
- Fig. 4 shows the sensor of fig. 3 in isolation.

In the following figures, equal numbers indicate equal parts.

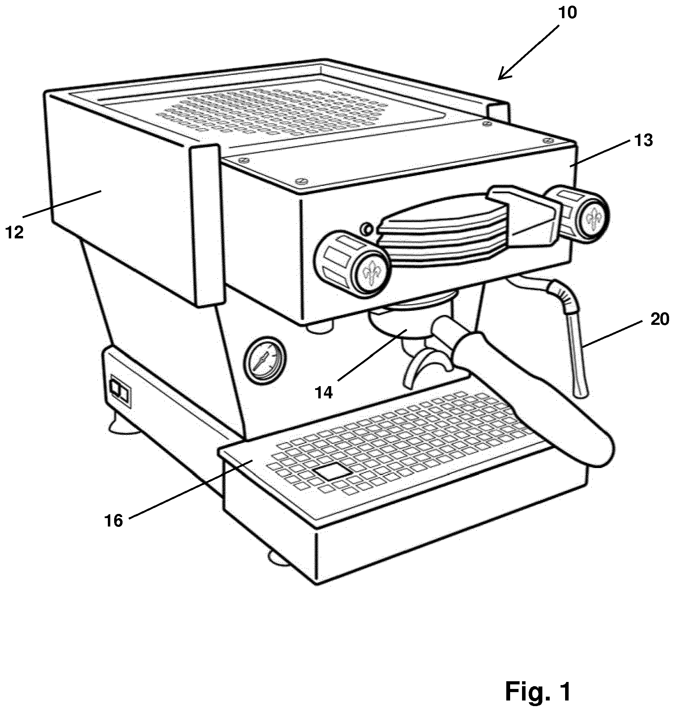

Fig. 1 shows a known espresso coffee machine 10, which comprises a frame or housing 12 in which there is a known support plane 16 for a receptacle T.

Above vertically the plane 16 there are arranged in known manner one or more espresso coffee dispensers 14 of known type, and a steam wand 20 capable of dispensing hot steam and/or forced air, from a terminal nozzle 22, inside the receptacle T, which contains e.g. a quantity of milk L.

The liquid in the container T can be any, as long as it is suitable for preparing a beverage.

The machine 10 also comprises an optional display with indicators and/or a control panel, indicated generically with 13.

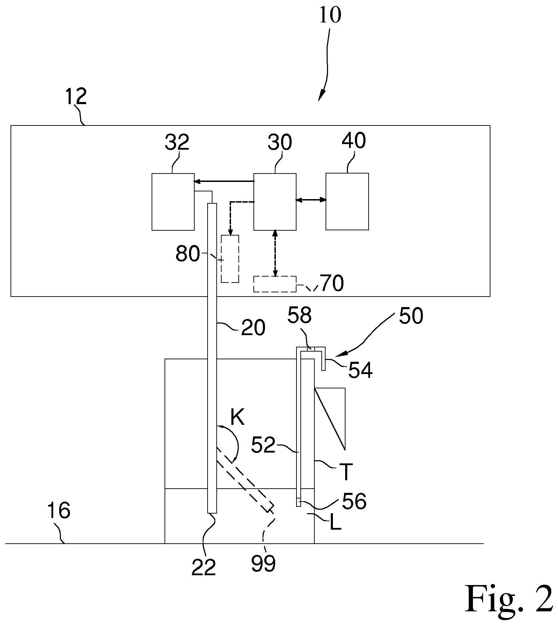

The wand 20 (see fig. 2) is fed by a hot-steam generator 32, which is controlled by an electronic unit 30, in turn connected to a radio receiver 40, e.g. a Bluetooth receiver. The generator 32 nay also be external to the machine 10, e.g. internal to an espresso coffee machine, in which case the wand 20 will be supplied by a supply duct (not shown).

Preferably the electronic unit 30 is a microprocessor, programmed to execute the actions specified here through related software program instructions.

The temperature of the milk L in the receptacle T is detected by a portable probe 50, i.e. insertable from time to time into a receptacle T for measuring the temperature of the contained liquid.

The portable probe 50 is separated from both the wand 20 and the receptacle T, and comprises, or consists of, a stem 52 and an optional hooked portion 54, integral with the stem 52. The hooked portion 54 has such a shape as to be able to be placed astride an edge of the receptacle T, for ease of use. However, other shapes or means are possible, all optional, to temporarily attach the probe 50 to the receptacle T.

At one end of the stem 52 or near an end of the stem 52 the probe 50 comprises a temperature sensor 56. The position of the sensor 56 preferably is such that in use it is immersed in the milk L.

The probe 50, in the hooked portion 54 or in the stem 52, has installed a transmitter 58, capable of transmitting a wireless signal containing a temperature data detected by the sensor 56.

The transmitter 58 is compatible with the receiver 40, which can therefore receive said signal.

Thanks to the transmitter 58 the control unit 30 is able to acquire the temperature data detected by the sensor 56, and therefore the control unit 30 is able to control, through the generator 32, the steam supply from the wand 20 as a function of the temperature detected by the sensor 56. The control of steam delivery from the wand 20 may include the control of the steam temperature (to keep the milk L temperature at a reference value) and/or the start and stop of the steam delivery (to stop the delivery if or when the milk L reaches a threshold temperature).

The probe 50 therefore offers the advantage of heating the milk L of any receptacle T always at an optimal temperature. It is sufficient to insert the probe 50 in the receptacle T and wait for the end of the steam supply from the wand 20.

The system of fig. 2 may comprise or manage a plurality of probes 50. In such case each probe 50 will send with the transmitter 58 its own identifier code, so that the unit 30 can distinguish which probe 50 is communicating the temperature data. In particular, it is beneficial that the electronic unity 30, before enabling or allowing the delivery of steam, compares the temperature data acquired by the receiver 30 with a minimum value threshold, and proceeds only if the acquired temperature data is lower. This avoids that the wand sends steam into a container with milk already warm in it, for example used in a previous preparation.

Note that one could not use already-warm or slightly heated milk, because the structural change process of the food (e.g. milk) is irreversible. The milk contains the three main "building blocks" of nutrition: proteins, sugars and fats. When the milk is heated, its internal structure gets changed.

Proteins undergo the greatest change during frothing. When the milk is cold they remain slightly curled up with the ends hidden and protected. When adding heat with the steam these begin to untangle. The ends of the proteins are polar opposite: one is hydrophilic (mixes with water) and one is hydrophobic (it is repelled by water). Considering that water is the base of milk, the hydrophobic end of the "protein chain" instantly combines with the air bubbles that the bartender adds to milk during frothing, while the hydrophilic part remains free to float in the aqueous base. This link between the liquid part and the air bubbles causes the froth (or the emulsified milk without bubbles) to remain suspended on the surface without these bubbles exploding as if air was blown into a glass of cold milk with a straw (cold milk does not get frothed because the proteins are still rolled up like balls of wool).

In case the system comprises two or more probes 50, it is convenient to find a way to manage them consistently. For this purpose, the unit 30 is preferably so configured as to process the signal transmitted by a probe 50 only when or after that the unit 30 has commanded the start of steam delivery. Then it will detect in real time the temperature increase of the sensor immersed into the liquid currently heated and consequently the unit 30 will know which probe 50 is in use at that moment.

Preferably the stem 52 comprises a graduated scale to indicate visually the liquid level inside the receptacle.

A variant of the system is visible in fig. 2 as well, which shows in dashed line additional and optional components.

A level detector 70 is installed on the machine 10, e.g. a pyrometric detector, capable of detecting the level of liquid L inside the receptacle T when it is placed on the plane 16.

The level detector 70 is connected to the electronic unit 30 so that the electronic unit 30 can detect and know the level e.g. of milk L.

In a first variant, the electronic unit 30 is configured to emit a warning signal if it detects a level higher and/or lower than a threshold value.

In a second variant, the electronic unit 30 is configured to control an actuator 80 (e.g. an electric motor) coupled to the wand 20 to move it back and forth with respect to the plane 16. By controlling the actuator 80 the unit 30 can insert the wand 20 into the receptacle T (for example, so that the nozzle of the wand 20 stays below the actual level of the milk L) or withdraw it therefrom. In particular, the electronic unit 30 is configured to control the actuator 80 as a function of the signal emitted by the detector 70, so as to insert the sensor 36 below the level of the liquid L at a desired depth.

In this way, the preparation of the beverage is optimal whatever the level L.

Fig. 2 shows another option for all the described variants. The wand 20 is formed by a vertical stem and a tip 99 inclined with respect to the vertical stem, e.g. by an angle K of 135 degrees. Thus, the inclined tip 99 is inclined with respect to the plane 16 and to the bottom of the receptacle T, e.g. by an angle of 45 degrees. In this way just the steam is enough to aerate the milk L and the wand 20 needs not to deliver air.

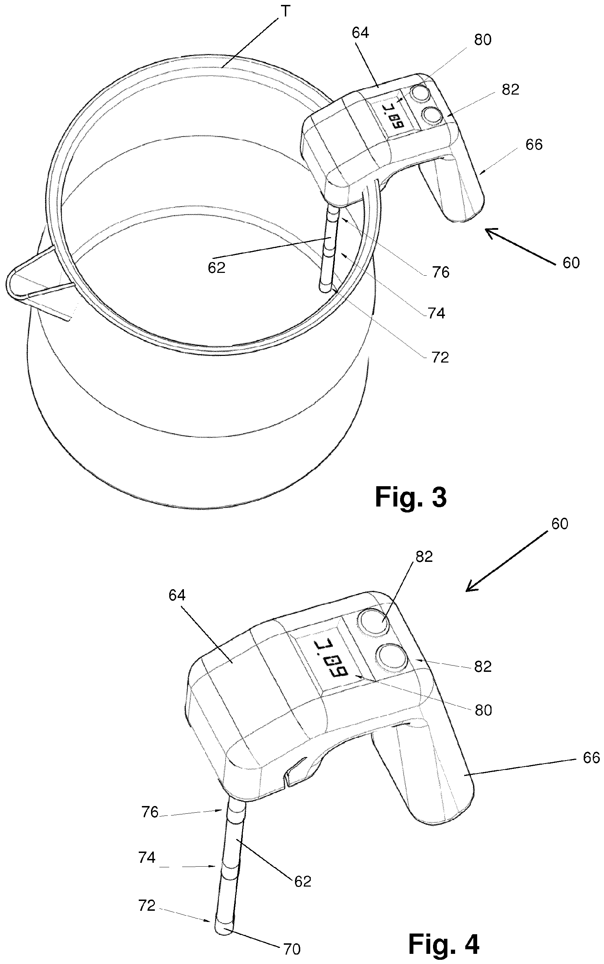

Figs. 3 and 4 show in more detail a variant 60 of a portable temperature probe for the milk L's temperature in the receptacle T.

The portable probe 60, too, is separated from both the wand 20 and the receptacle T, and comprises, or consists of, a stem 62, a central body 64 and a handle 66.

The stem 62 projects cantilevered from the central body 64, from which also the handle 66 protrudes, all together forming a sort of "L" or "J".

The central body 64 is so shaped as to be able to be arranged astride an edge of the receptacle T, and so that the stem 62 extends towards the bottom of the receptacle T while the handle 66 extends cantilevered from the receptacle T to be grasped.

At one end of the stem 62 or near an end of the stem 62 the probe 60 comprises a temperature sensor 70. The position of the sensor 70 preferably is such that in use is immersed in the milk L.

On the stem 62 there may be only one temperature sensor or several sensors arranged along the length of the stem 62, e.g. at a constant pitch. In the figures three sensors 72, 74, 76 are shown as an example. Multiple temperature sensors allow improving the temperature data because they detect it at several points of the milk L, and e.g. an average value can be generated.

Like for the probe 50, the probe 60 comprises installed a transmitter capable of transmitting a wireless signal containing a temperature data detected by its own sensor. For the signal or data transmitted to the control unit 30, the operation is similar to the previous one.

Optionally the central body 64 comprises a display 80 for displaying data or parameters relating to the milk L, e.g. its detected temperature, or operating parameters of the machine 10. The operating parameters of the machine 10 displayed by the display 80 are received through the wireless channel between the machine 10 and the sensor 60.

Optionally the central body 64 comprises a command-input interface for the user, e.g. some buttons 82. Through the interface a user can send commands to the probe 60 or to the machine 10, through said wireless channel.

In a variant the probe 60 can be permanently fixed to, or be integral with, the receptacle T.

Preferably the stem 62 comprises a graduated scale to indicate visually the liquid level inside the receptacle.

## Claims

1. Method for heating and/or frothing milk (L) or a liquid with a wand (20), supplying heated steam, belonging to an electric beverage production apparatus, in particular an espresso coffee machine,
the milk (L) or liquid being contained in a container (T) external to the machine, with the steps of
- detecting the temperature of the milk (L) or liquid by a portable temperature probe (50), separated and/or detachable from the wand (20) and from the container (T) and from any component of the apparatus, and
- electronically controlling the steam supply from the wand (20) as a function of the detected temperature.

2. Method according to claim 1, wherein the probe (50) is inserted/insertable when needed inside the container (T) where in use there is the milk or liquid.

3. Method according to claim 1 or 2, wherein the probe (50) transmits a temperature data to a receiver of the apparatus via a radio signal,

4. Method according to claim 1 or 2 or 3, wherein the temperature detected by the probe (50) is ignored by the electronic control of the steam if this temperature is higher than a threshold value.

5. Method according to claim 1 or 2 or 3 or 4, wherein the temperature detected by the probe is ignored by the electronic control until the steam delivery has started.

6. Method according to claim 1 or 2 or 3 or 4 or 5, wherein
the milk (L) or liquid level inside the container (T) is electronically detected and by an electronic control the wand (20) is lowered inside the container until a steam nozzle (22), arranged at one end of the wand, is immersed into the liquid or milk for a depth depending on the detected level.

7. System for producing a milk-based beverage (L) or hot liquid, comprising:
a machine (10), in particular an espresso coffee machine, comprising
a wand(20) capable of emitting heated steam, and
a control unit (30) for controlling the delivery of steam from the wand,
a container (T), external to the machine (10), to contain the milk (L) or liquid to be heated,
a temperature probe (50), for detecting the temperature of the milk or liquid (L) inside the container (T), that is
portable,
separated/ separable from the wand (20), from the container (T) and from any component of the machine, and
configured to transmit to the control unit (30) a detected temperature data, so that the control unit (30) controls the delivery of steam from the wand (20) as a function of the detected temperature.

8. System according to claim 7, wherein the temperature probe (50) comprises
a stem (52) comprising, in proximity of one end thereof, a temperature sensor (56), and
a hooked portion (54), integral with the stem, having a shape such that it can be arranged astride an edge of the container (T).

9. System according to claim 7 or 8, wherein the probe (50) comprises a wireless signal transmitter (58) for transmitting a temperature data to a compatible receiver (70) of the machine (10).

10. Use of a temperature sensor (56) to detect the temperature of liquid or milk (L) contained in a container (T) external to a machine (10) structured to heat and/or froth the liquid or milk with a wand (20) supplying heated steam,
wherein the temperature sensor is separated from the wand, the container and any component of the machine.
